(19) Europäisches Patentamt
European Patent Office
Office européen des brevets

(11) **EP 1 276 222 A2**

(12) **EUROPÄISCHE PATENTANMELDUNG**

(43) Veröffentlichungstag:
**15.01.2003 Patentblatt 2003/03**

(51) Int Cl.⁷: **H02P 7/00**

(21) Anmeldenummer: **02015724.4**

(22) Anmeldetag: **12.07.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **12.07.2001 DE 10133943**

(71) Anmelder: **REO BORIS VON WOLFF GmbH & Cie.
D-10553 Berlin (DE)**

(72) Erfinder:
• **Twellsieck, Friedel
  10577 Berlin (DE)**
• **Ekeris van, Uwe
  40721 Hilden (DE)**
• **Röbel, Friedhelm
  42781 Haan (DE)**

(74) Vertreter: **von Puttkamer, Nikolaus, Dipl.-Ing. et al
Franziskanerstrasse 38
81669 München (DE)**

(54) **Verfahren zur Ansteuerung eines Schwingförderers**

(57) Die Erfindung betrifft ein Verfahren zur Ansteuerung eines durch einen Magneten angetriebenen Schwingförderers, wobei die Schwingbewegung des Magneten (1) aus dem Verlauf des beim Anlegen einer Spannung (u(t)) an den Magneten (1) fließenden Stromes (i(t)) ermittelt wird. Entsprechend einer gewichteten Mittelwertbildung werden nur bestimmte Bereiche der Kurvenform des Stromes (i(t)) ausgewertet.

Fig.1

**Beschreibung**

Die vorliegende Erfindung betrifft ein Verfahren zur Ansteuerung eines Schwingförderers nach dem Oberbegriff des Patentanspruchs 1.

Aus der WO 96/23248 ist eine Einrichtung zur Ansteuerung eines Schwingförderers bekannt, bei der von einer Stromquelle einem den Schwingförderer anregenden Elektromagneten ein Strom zugeführt wird. Dabei bilden der Elektromagnet zusammen mit dem Kern und dem Joch sowie den Luftspalten einen elektromagnetischen Kreis, dessen Impedanz von der Gesamtlänge der Luftspalte abhängt. Die Ansteuerung des Elektromagneten erfolgt bei der bekannten Einrichtung basierend auf der mathematischen Berechnung des augenblicklichen Werts des Luftspalts des Elektromagneten aus den augenblicklichen Werten des Stroms und der Spannung am Elektromagneten. Ein Problem besteht dabei darin, daß die errechenbaren Werte in der Nähe der Nullinie des Stroms und der Feldstärke keine auswertbaren Ergebnisse bringen. Zudem gilt der Zusammenhang $1 \approx I/B$ zwischen dem Luftspalt 1, dem Strom I und dem Feldstärkeverlauf B nur dann, wenn die Eisensättigung vernachlässigt wird.

Die Aufgabe der vorliegenden Erfindung besteht darin, ein Verfahren zur Steuerung eines Schwingförderers zu schaffen, bei dem eine möglichst exakte Berechnung der Schwingbewegung 1 aus der Kurvenform des an den Elektromagneten angelegten Stroms möglich ist.

Diese Aufgabe wird durch ein Verfahren zur Steuerung eines Schwingförderers mit den Merkmalen des Patentanspruchs 1 gelöst.

Der Vorteil der vorliegenden Erfindung besteht darin, daß eine äußerst genaue Ermittlung der Schwingbewegung des Elektromagneten eines Schwingförderers aus der Kurvenform des an den Elektromagneten angelegten Stroms möglich ist, da der Ermittlung nur diejenigen Kurvenabschnitte der Kurvenform des Stroms zugrunde gelegt werden, die weder durch die Eisensättigung (bei maximaler Feldstärke) noch durch einen geringen Störabstand (bei geringer Feldstärke) beeinträchtigt sind.

Im folgenden werden die Erfindung und deren Ausgestaltungen im Zusammenhang mit den Figuren näher erläutert. Es zeigen:

Fig.1     in schematischer Darstellung ein Schaltbild zur Ansteuerung eines Schwingförderers;

Fig. 2     zur Erläuterung die nach dem erfindungsgemäßen Verfahren ermittelte Schwingbewegung des Elektromagneten eines Schwingförderers in Resonanz;

Fig. 3     die Schwingbewegung des Schwingförderers in Unter-Resonanz; und

Fig. 4     die Schwingbewegung des Schwingförderers in Über-Resonanz.

Zu der Erfindung führten die folgenden Überlegungen. Ausgehend von dem sich beim Anlegen einer Spannung an den Magneten eines Schwingförderers ergebenden Verlauf des in den Magneten fließenden Stroms kann die Schwingbewegung des Magneten bestimmt werden, wie dies aus dem eingangs genannten Stand der Technik hervorgeht. Dabei wird ausgenutzt, daß die Amplitude des Stroms von der Größe des Luftspalts des Magneten abhängt. Es gilt die bereits genannte Formel: $1 \approx I/B$, wobei 1 die Schwingweite, I den Stromverlauf und B den Feldstärkeverlauf bezeichnen. Anders ausgedrückt schwankt die Induktivität des Magneten mit der Größe des Luftspalts desselben. Ein Problem besteht dabei darin, daß die Werte der Schwingweite 1 in der Nähe der Nullinie des Stroms und der Feldstärke keine auswertbaren Ergebnisse ergeben. Zudem gilt die genannte Formel nur dann, wenn die Eisensättigung vernachlässigt wird. Um dennoch die Schwingbewegung des Magneten des Schwingförderers aus der Kurvenform des Stroms ermitteln zu können, werden erfindungsgemäß entsprechend einer gewichteten Mittelwertbildung nur diejenigen Bereiche der Kurvenform des Stroms ausgewertet bzw. zur Ermittlung der Schwingbewegung herangezogen, die weder durch die Eisensättigung (bei maximaler Feldstärke) noch durch einen geringen Störabstand (bei geringer Feldstärke) beeinträchtigt sind.

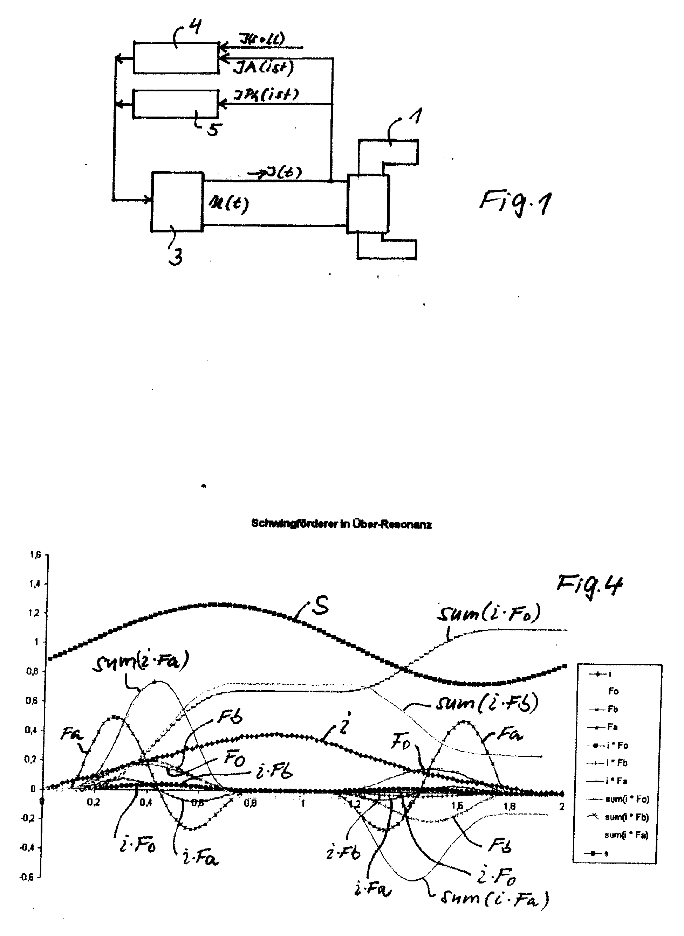

Gemäß Fig. 1 wird dabei der Magnet 1 eines Schwingförderers durch die Spannung U(t) einer Spannungsquelle 3 angesteuert, um eine sinusförmige Magnetkraft mit einer eingeprägten Kurvenform zu erzeugen. Die als Spannungsquelle 3 dienende Leistungsendstufe wird durch einen Amplitudenregler 4 und einen Frequenzregler 5 angesteuert.

Die Schwingbewegung 1 des Magneten 1 wird nach der Amplitude IA(ist) und der Phase Iph(ist) aus dem Verlauf des Stroms I(t) ermittelt. Die ermittelte Amplitude IA(ist) dient als Ist-Wert für den Amplitudenregler 4. Der Soll-Wert I(soll) für den Amplitudenregler 4 wird durch den Anwender des Schwingförderers von außen eingegeben.

Der Soll-Wert für die Phasenlage ist in Bezug auf den Magnetkraftverlauf im Resonanzbetrieb fest mit 90° vorgegeben.

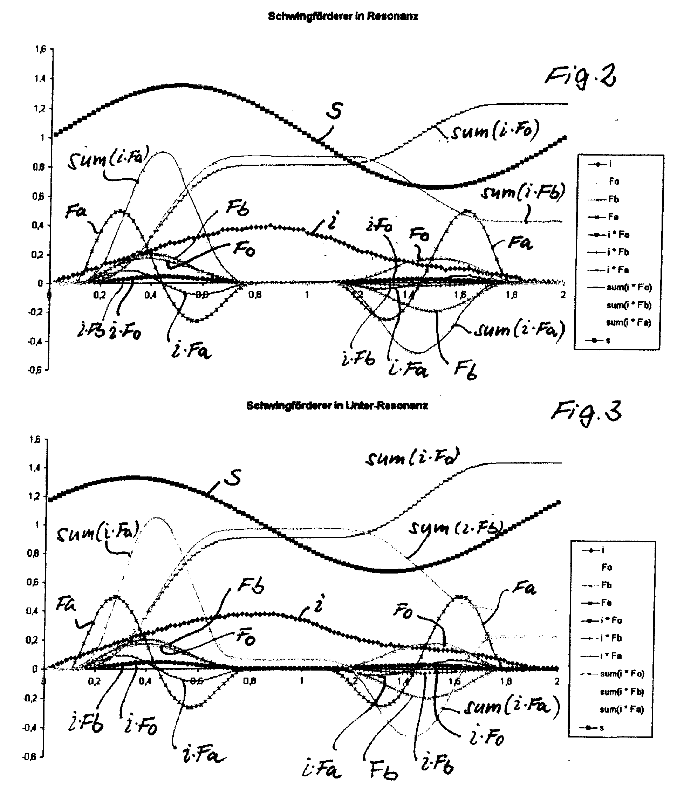

Der Schwingungsverlauf S rein sinusförmig. Er fängt im Resonanzfall, den die Fig. 2 zeigt, exakt bei dem Wert 1 (Y-Achse) an und endet nach einer Periodendauer (Wert 2 auf der X-Achse) wieder exakt beim Wert 1. Bei Über-Resonanz ist die Phase des Schwingungsverlaufs S gemäß Fig. 4 nach rechts verschoben und beginnt beispielsweise beim Wert 0,9 (Y-Achse). Im Falle einer Unter-Resonanz ist die Phase des Schwingungsverlaufs S gemäß Fig. 3 nach links verschoben und beginnt beispielsweis beim Wert 1,18 (Y-Achse).

Der Schwingungsverlauf S wird, damit er völlig sauber und störungsfrei dargestellt werden kann, wie oben bereits erwähnt, erfindungsgemäß aus vorbestimmten unkritischen Bereichen des Stromverlaufs i des Stroms I ermittelt.

Da es sich bei dem Magneten 1 um einen ungepolten Magneten handelt, weist der Stromverlauf i in einer Schwingperiode (Werte 0 bis 2 auf der X-Achse) des Stroms I die Form einer Halbwelle auf.

Der ermittelte Schwingungsverlauf S der Schwingbewegung verläuft nicht symmetrisch zur Nullinie, sondern er schwankt um die Ruheinduktivität des sich nicht in Bewegung befindlichen Magneten 1. Dies entspricht in der Fig. 2 dem Wert 1 des Luftspalts (Y-Achse). In der ersten Halbperiode (Wert 0 bis 1 auf der X-Achse) ist der Luftspalt > 1, weil die Induktivität verkleinert ist, und in der zweiten Halbperiode (Wert 1-2 auf der X-Achse) ist der Luftspalt < 1, weil die Induktivität vergrößert ist. In der ersten Halbperiode erreicht die Amplitude des Schwingungsverlaufs S beispielsweise maximal den Wert +1,3, während sie in der zweiten Halbperiode den Wert +0,7 erreicht. Demgemäß nimmt die Amplitude des Stromverlaufs i in der ersten Halbperiode bis auf etwa den Wert 0,4 zu, weil der Magnet 1 bei größerem Luftspalt mehr Strom verbraucht, und nimmt die Amplitude in der zweiten Halbperiode von diesem Wert 0,4 wieder ab, weil der Magnet 1 bei kleinerem Luftspalt weniger Strom verbraucht. Die Amplitude des Stromverlaufs i hängt also von der Größe des Luftspalts des Magneten 1 ab. Dies ist der Grund dafür, daß aus dem Stromverlauf i des Stroms I (t) der Schwingungsverlauf S der Schwingungsbewegung des Magneten 1 bestimmt werden kann.

Diese Bestimmung des Schwingungsverlaufs S der Schwingbewegung erfolgt unter Zuhilfenahme der Fourier-Analyse.

Zur Bestimmung werden erfindungsgemäß drei Filterkurven Fo, Fb und Fa vorgegeben, wobei die Filterkurve Fo eine Gewichtung der Fourier-Analyse bei der Auswertung des Stromverlaufs i vorgibt. Dabei werden entsprechend der Gewichtung ungeeignete Bereiche des Stromverlaufs i unterdrückt und nur bestimmte, geeignete Bereiche dieses Stromverlaufs i ausgewertet. Demgemäß ist die Filterkurve Fo in den Bereichen 0 und 2 der X-Achse, d.h. also bei den Nulldurchgängen des Stromverlaufs i = 0, so daß diese Nulldurchgänge nicht in die Auswertung des Stromverlaufs i eingehen.

Da die Eisensättigung des Magneten 1 dazu führt, daß der Stromverlauf i des Stroms I(t) im Zeitbereich 0,8 bis 1,2 (X-Achse) zusätzlich angehoben wird, wird die Filterkurve Fo auch in diesem Bereich auf den Wert 0 eingestellt, so daß die Eisensättigung ebenfalls nicht in die Auswertung des Stromverlaufs i eingeht.

Da die Werte der Filterkurve Fo zu aufeinanderfolgenden Zeitpunkten mit den entsprechenden Amplitudenwerten des Stromverlaufs i multipliziert werden, ist die sich ergebende Kurve des Produkts i·Fo zu den Zeiten des Nulldurchgangs und der Eisensättigung jeweils 0. Genauer gesagt, werden also durch Vorgabe der Filterkurve Fo die Zeitbereiche 0 bis 0,2 und 0,8 bis 1,2 sowie 1,8 bis 2 des Stromverlaufs i von der Bewertung ausgeschlossen.

Zur Ermittlung der Amplituden- und Phasenlage des exakt sinusförmigen Schwingungsverlaufs werden auch die bereits genannten Filterkurven Fb und Fa benötigt, die einem Sinusverlauf bzw. einem Cosinusverlauf der Grundwelle entsprechen.

Die Filterkurve $F_b$ ist in Bezug auf den die halbe Periode anzeigenden Punkt 1 der X-Achse symmetrisch, wenn man von dem Vorzeichen absieht. Die Filterkurve Fb ergibt sich durch Multiplikation der Filterkurve Fo mit einem Sinus. Dadurch, daß die Filterkurve Fb, vom Vorzeichen abgesehen, im ersten Abschnitt 0 bis 1 und im zweiten Abschnitt 1 bis 2 symmetrisch ist, der Stromverlauf i des Stroms I jedoch im ersten Abschnitt größer als im zweiten Abschnitt ist, wie dies oben erläutert wurde, ist der Verlauf i·Fb im ersten Abschnitt vom Verlauf her ebenfalls größer als im zweiten Abschnitt. Im ersten Abschnitt ist der Verlauf i·Fb weitgehend durch die Kurve i·Fo verdeckt, da diese im ersten Abschnitt ebenfalls positiv ist.

Die Filterkurve Fa ist ebenfalls in Bezug auf den die halbe Periode anzeigenden Wert 1 symmetrisch. Sie ergibt sich durch Multiplikation der Filterkurve Fo mit einem Cosinus. Der Kurvenverlauf i·Fa ist, da der Stromverlauf i in dem ersten Abschnitt 0 - 1 größere Amplitudenwerte erreicht als im zweiten Abschnitt 1 - 2, im ersten Abschnitt größer als im zweiten Abschnitt.

Der Schwigungsverlauf S wird im Rahmen einer Fourier-Analyse ermittelt. Dabei wird genauer gesagt der Schwingungsverlauf S, der die Periode T (0 - 2) auf der X-Achse hat, exakt durch die Fourier-Koeffizienten

$$a_1 = \frac{2}{T} \int_0^T f(t) \cos(wt)\, dt$$

und

$$b_1 = \frac{2}{T} \int_0^T f(t) \cdot \sin(w \cdot t)\,dt$$

ermittelt.

Für die Phasenlage des Schwingungsverlaufs S gilt dabei:

$$\varphi = \arctan \frac{b_1}{a_1}$$

Für die Amplitude des Schwingungsverlaufs S gilt:

$$c = \sqrt{a_1^2 + b_1^2}.$$

Es müssen also aus den bisher vorliegenden Kurven bzw. Verläufen i, Fo, Fb, Fa, i·Fo, i·Fb und i·Fa die Summen: sum (i·Fo), sum(i·Fb) und sum (i·Fa) bestimmt werden.

Nach jeder Schwingungsperiode T werden der Endwert $\Sigma$(i·Fo) der laufenden Summe: sum(i·Fo), der Endwert $\Sigma$(i·Fb) der laufenden Summe: sum(i·Fb) und der Endwert $\Sigma$(i·Fa) der laufenden Summe: sum(i·Fa) ermittelt.

Die Summe $\Sigma$(i.Fb) wird durch die Summe $\Sigma$(i·Fo) geteilt und es ergibt sich b = $\Sigma$(i·Fb)/$\Sigma$(i·Fo). Die Summe $\Sigma$(i·Fa) wird durch die Summe $\Sigma$(i·Fo) geteilt und es ergibt sich a = $\Sigma$(i·Fa) /$\Sigma$(i·Fo)

Aus diesen Endwerten wird der Schwingungsverlauf S anhand der folgenden Formel S = a·cos(wt) + b·sin (wt) ermittelt.

Zur Verdeutlichung werden die einzelnen aufeinanderfolgenden Schritte der erfindungsgemäß en Ermittlungsweise in der nachfolgenden Tabelle I noch einmal dargestellt. Die Tabelle II zeigt die der Ermittlung zugrunde liegenden Verläufe bzw. Kurven.

## Tabelle I

### Programmablauf

**Laufend...**
- Magnetstrom i messen
- Magnetstrom i mit vorbestimmter Filterkurve Fo multiplizieren, Ergebnis: i * Fo
- Laufende Summe der Produkte aus i und Fo bilden, Ergebnis: sum(i * Fo)
- Magnetstrom i mit vorbestimmter Filterkurve Fb multiplizieren, Ergebnis: i * Fb
- Laufende Summe der Produkte aus i und Fb bilden, Ergebnis: sum(i * Fb)
- Magnetstrom i mit vorbestimmter Filterkurve Fa multiplizieren, Ergebnis: i * Fa
- Laufende Summe der Produkte aus i und Fa bilden, Ergebnis: sum(i * Fa)

**Nach jeder Schwingungsperiode...**
- Endwert der laufenden Summe bestimmen: sum(i * Fo) => $\Sigma$(i * Fo)
- Endwert der laufenden Summe bestimmen: sum(i * Fb) => $\Sigma$(i * Fb)
- Endwert der laufenden Summe bestimmen: sum(i * Fa) => $\Sigma$(i * Fa)
- Summe $\Sigma$(i * Fb) durch Summe $\Sigma$(i * Fo) teilen, Ergebnis: b = $\Sigma$(i * Fb) / $\Sigma$(i * Fo)
- Summe $\Sigma$(i * Fa) durch Summe $\Sigma$(i * Fo) teilen, Ergebnis: a = $\Sigma$(i * Fa) / $\Sigma$(i * Fo)
- Endergebnis: Schwingungsverlauf s = a * cos($\omega$t) + b * sin($\omega$t)

Tabelle II

| Zur Legende | | |
|---|---|---|
| i | Magnetstrom | gemessen |
| Fo | Filterkurve Ruhelage | vorbestimmt |
| Fb | Filterkurve Sinus | vorbestimmt |
| Fa | Filterkurve Cosinus | vorbestimmt |
| i * Fo | Produkt aus Magnetstrom und Fitterkurve Ruhelage | berechnet |
| i * Fb | Produkt aus Magnetstrom und Filterkurve Sinus | berechnet |
| i*Fa | Produkt aus Magnetstrom und Filterkurve Cosinus | berechnet |
| sum(i * Fo) | Laufende Summe der Produkte aus i und Fo | berechnet |
| sum(i * Fb) | Laufende Summe der Produkte aus i und Fb | berechnet |
| sum(i * Fa) | Laufende Summe der Produkte aus i und Fa | berechnet |
| s | Schwingungsverlauf | berechnet |

Es ist erkennbar, daß im Resonanzfall der Fig. 2 der Schwingungsverlauf S sinusförmig um den Dezilevel 1 schwingt, wobei er beispielsweise beim Wert x = 0 exack am Wert y = 1 beginnt.

Im Fall der Unterresonanz ist der Schwingungsverlauf S gemäß Fig 3 gegenüber dem Schwingungsverlauf der Fig. 2 nach links verschoben. Beim Wert x = 0 beginnt er beispielsweise beim Wert y = 1,9.

Im Fall der Überresonanz (Fig. 4) ist der Schwingungsverlauf S nach rechts verschoben, so daß er beim Wert x = 0, beispielsweise beim Wert y = 0,9 beginnt.

Aufgrund dieser Phasenverschiebungen und Amplitudenschwankungen in vorgegebenen x-Werten läßt sich die Kurve des Schwingungsverlaufs S gemäß Fig. 2 exakt einregeln, da die Ist-Werte der Phase Iph(ist) und der Amplitude IA(ist) dem Frequenzregler 5 und dem Amplitudenregler 4 als Ist-Werte laufend zugeführt und auf die dort für den Resonanzfall eingegebenen Soll-Werte geregelt werden.


**Patentansprüche**

1. Verfahren zur Ansteuerung eines durch einen Magneten angetriebenen Schwingförderers, wobei die Schwingbewegung des Magneten (1) aus dem Verlauf des beim Anlegen einer Spannung (u(t)) an den Magneten (1) fließenden Stromes (i(t)) ermittelt wird, **dadurch gekennzeichnet, dass** entsprechend einer gewichteten Mittelwertbildung nur bestimmte Bereiche der Kurvenform des Stromes (i(t)) ausgewertet werden.

2. Verfahren nach Anspruch 1, **dadurch gekennzeichnet, dass** die Kurvenvorm des Stromes (i(t)) im Bereich der Nulldurchgänge und/oder im Bereich des Maximums nicht ausgewertet wird.

Fig.1

Schwingförderer in Über-Resonanz

Fig.4

Schwingförderer in Resonanz

Fig.2

Schwingförderer in Unter-Resonanz

Fig.3